**Europäisches Patentamt**

**European Patent Office**

**Office européen des brevets**

(11) Veröffentlichungsnummer: **0 136 284**
**B1**

(12) **EUROPÄISCHE PATENTSCHRIFT**

(45) Veröffentlichungstag der Patentschrift: **04.04.90**

(21) Anmeldenummer: **84890175.7**

(22) Anmeldetag: **21.09.84**

(51) Int. Cl.⁵: **D 21 F 1/00, D 03 D 11/00,**
**D 03 D 13/00, B 01 D 39/08,**
**B 07 B 1/46, B 01 D 39/12**

(54) **Entwässerungssieb.**

(30) Priorität: **22.09.83 AT 3386/83**

(43) Veröffentlichungstag der Anmeldung:
**03.04.85 Patentblatt 85/14**

(45) Bekanntmachung des Hinweises auf die
Patenterteilung:
**04.04.90 Patentblatt 90/14**

(84) Benannte Vertragsstaaten:
**BE CH DE FR GB IT LI NL SE**

(56) Entgegenhaltungen:
**EP-A-0 116 945**
**DE-A-2 455 185**
**DE-A-2 917 694**
**US-A-3 127 308**

(73) Patentinhaber: **Hutter & Schrantz AG**
**Grossmarktstrasse 7**
**1232 Wien (AT)**

(72) Erfinder: **Kovar, Walter, Dr.**
**Rudolf Schmidtweg 7A**
**A-2371 Hinterbrühl (AT)**

(74) Vertreter: **Rippel, Andreas, Dipl.-Ing.**
**Maxingstrasse 34**
**A-1130 Wien (AT)**

Courier Press, Leamington Spa, England.

## Beschreibung

Die Erfindung bezieht sich auf ein Entwässerungssieb, bestehend aus mindestens zwei, Kett- und Schußfäden aufweisenden Gewebelagen, die durch gesonderte Bindefäden miteinander verbunden sind.

Derartige Entwässerungssiebe haben den grundsätzlichen Vorteil, daß die obere, mit dem Papiervlies in Verbindung stehende Lage, sehr fein gewebt sein kann, wogegen die untere Lage, ihrer Aufgabe zur Aufnahme der mechanischen Beanspruchung entsprechend, gröber ausgebildet ist.

In der DE—A—2 455 185 ist ein solches Entwässerungssieb beschrieben, wobei die als Kettfäden ausgebildeten Bindefäden die beiden Lagen derart miteinander verbinden, daß beim fertigen Sieb die obere Lage nicht absolut plan in ihrer Oberflächenlage ausgeführt ist. Dies ist vor allem bei der Erzeugung von dünngrammigen bzw. markierungsempfindlichen Papieren von Nachteil, da durch das unterschiedliche Niveau der Auflage Siebmarkierungen in stärkerem Ausmaß hervorgerufen werden.

Diesen Nachteil können auch Entwässerungssiebe nicht beheben wie sie z.B. in der US—A—3 127 308 beschrieben sind und bei denen Kettfäden der unteren Lage auch die Bindefäden für beide Lagen darstellen. Auch bie diesen bekannten Entwässerungssieben können die Bindekettfäden die beiden Lagen beim fertigen Sieb nicht so miteinander verbinden, daß die obere Lage plan ist.

Die Erfindung hat es sich zum Ziel gesetzt, ein Entwässerungssieb der eingangs genannten Art derart auszubilden, daß die aufgezeigten Nachteile vermieden werden und demnach die obere Lage plan in ihrer Oberflächenlage ist. Erreicht wird dies dadurch, daß an denjenigen Stellen, an denen die Bindefäden über die Fäden der oberen Lage geführt sind, die Fäden der oberen Lage in direktem Kontakt mit einem in gleicher Richtung verlaufenden Faden der unteren Lage stehen, und daß die Fadenoberflächen der unteren Lage, die die Auflagepunkte für die durch die gesonderten Bindefäden fixierten Fäden der oberen Lage bilden, in einer Ebene liegen. Dadurch, daß im Bereich der Verbindung der beiden Gewebelagen des Siebes in gleicher Richtung verlaufende Fäden beider Lagen aneinander liegen und sich die Auflagepunkte in einer Ebene befinden, erfolgt auch während der Wärmebehandlung der Gewebe keine Veränderung des Niveaus der oberen Lage, da die Kontaktpunkte der Fäden auch dabei erhalten bleiben.

Zweckmäßig sind die Bindefäden Schußfäden und bestehen aus Polyamid. Die Verbindung der beiden oder mehrerer Lagen durch Schußfäden ist webtechnisch einfacher zu lösen und zufolge der Ausbildung der Bindefäden aus Polyamid wird auch bei der Thermofixierung eine günstige Verbindung aufrecht erhalten.

Nachstehend ist die Erfindung an Hand von in den Zeichnungen dargestellten Ausführungsbeispielen näher beschrieben. Dabei zeigen die Figuren je im Querschnitt ein erfindungsgemäßes Gewebe.

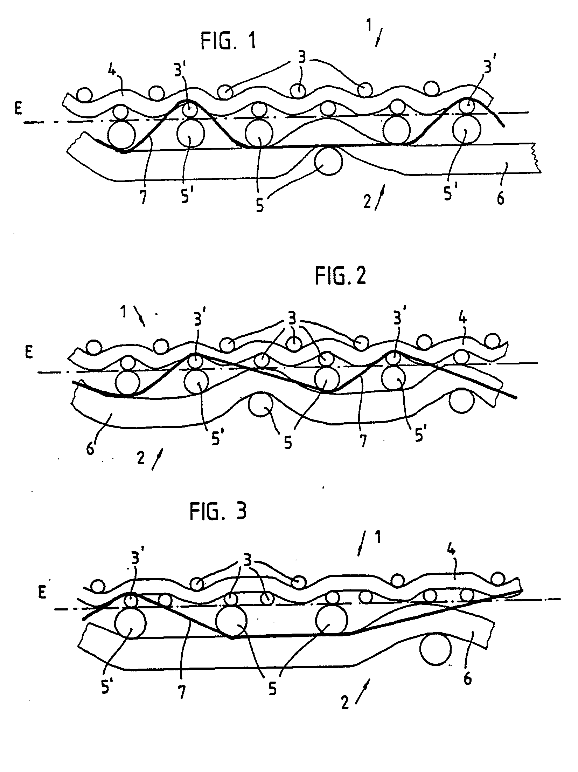

Beim Ausführungsbeispiel nach Fig. 1 weist die obere Lage 1 eine einfache Bindung, die untere Lage 2 eine vierschäftige Bindung auf. Die obere Lage besitzt Kettfäden 3 und Schußfäden 4, die untere Lage Kettfäden 5 und Schußfäden 6. Die Fäden 5 und 6 sind dabei in bekannter Weise stärker ausgebildet als die Fäden 3 und 4.

Auch beim Beispiel nach Fig. 2 ist die obere Lage 1 mit einer einfachen Bindung ausgestattet. Die untere Lage 2 besitzt jedoch eine Dreiköperbindung.

Die obere Lage 1 gemäß Fig. 3 hat ein Dreiköperbindung, die untere Lage 2 besitzt eine vierschäftige Bindung.

Zur Verbindung der beiden Lagen 1 und 2 aller drei Ausführungsbeispiele sind gesonderte Bindefäden 7 vorgesehen, die Schußfäden sind und bei den Ausführungsbeispielen aus Polyamid bestehen. Diese Bindefäden 7 sind so geführt, daß die Fäden 3' der oberen Lage 1, über die die Bindefäden 7 verlaufen, in direktem Kontakt mit einem in gleicher Richtung verlaufenden Faden 5' der unteren Lage 2 stehen. Die Kontaktpunkte der Fäden 3' und 5' liegen dabei in einer Ebene E.

## Patentansprüche

1. Entwässerungssieb, bestehend aus mindestens zwei, Kett- und Schußfäden aufweisenden Gewebelagen (1, 2), die durch gesonderte Bindefäden (7) miteinander verbunden sind, dadurch gekennzeichnet, daß an denjenigen Stellen, an denen die Bindefäden (7) über die Fäden (3') der oberen Lage geführt sind, die Fäden (3') der oberen Lage in direktem Kontakt mit einem in gleicher Richtung verlaufenden Faden (5') der unteren Lage (2) stehen, und daß die Fadenoberflächen der unteren Lage (2), die die Auflagepunkte für die durch die gesonderten Bindefäden (7) fixierten Fäden (3') der oberen Lage (1) bilden, in einer Ebene liegen.

2. Entwässerungssieb nach Anspruch 1, dadurch gekennzeichnet, daß die Bindefäden (7) Schußfäden sind und aus Polyamide bestehen.

## Revendications

1. Tamis d'égouttage composé d'au moins deux couches de tissu (1, 2) comportant des fils de chaîne et de trame et liées entre elles par des fils de liage (7) séparés, caractérisé en ce qu'aux endroits où les fils de liage (7) passent au-dessus des fils (3') de la couche supérieure, les fils (3') de la couche supérieure sont en contact direct avec un fil (5') de la couche inférieure s'étendant dans la même direction, et que les surfaces de fils de la couche inférieure (2) qui constituent les points d'appui pour les fils (3') de la couche supérieure (1) fixés par les fils de liage séparés (7) sont situées dans un plan.

2. Tamis d'égouttage selon la revendication 1, caractérisé en ce que les fils de liage (7) sont des fils de trame et sont réalisés en polyamide.

## Claims

1. Drainage sieve, consisting of at least two cloth layers with warp and woof (1, 2), connected to each other by means of separate binding threads (7), characterised in that the upper layer threads (3′), at the points where the binding threads (7) run above the upper layer threads (3′), are set in direct contact with one lower layer (2) thread (5′) running in the same direction, and in that the thread surfaces of the lower layer (2) forming the points of attachment for the upper layer (1) threads (3′), which are connected by the separate binding threads (7), are set at one level.

2. Drainage sieve according to claim 1, characterised in that the binding threads (7) are threads of the woof and are made of polyamide.

FIG. 1

FIG. 2

FIG. 3